# EUROPEAN PATENT APPLICATION

(11) **EP 4 530 781 A1**
(43) Date of publication of application: **02.04.2025**
(21) Application number: 23200548.8
(22) Date of filing: 28.09.2023
(51) Int. Cl.: G05B 23/02

(54) **MONITORING AND ANALYZING OPERATION DATA**

(71) Applicant: Siemens Schweiz AG, 8047 Zürich (CH)
(72) Inventor: NUSSBAUMER, Lisa Maria, 1160 Wien (AT); ENGELBRECHT, Gerhard, 1050 Wien (AT); VALERIO, Danilo, 1230 Wien (AT)
(74) Representative: Siemens Patent Attorneys

(57) **Abstract**

The invention relates to a method for monitoring and analyzing operating data, especially of machines (1) in buildings (2).

In a method that is simple and minimally invasive, a soundscape in a technical room (3), in particular a machine noise, is recorded with a recording device (4), to determine a state of the machinery. The recorded sound is digitally saved as an audio file and transmitted to an edge device (5). The edge device (5) processes the audio files and creates an image of a sound spectrogram of the audio files. The state of the machinery is determined by analyzing the sound spectrogram.

## Description

The present invention relates to a method for monitoring and analyzing operating data, especially of machines in buildings.

The present invention further relates to a device for monitoring and analyzing operating data with a recording device, wherein the recording device comprises at least one microphone and with at least one edge device.

In smart building management, monitoring the operation of HVAC (heating, ventilation, or air conditioning) systems is an important aspect. An effective monitoring system is necessary to observe the ongoing performance of building equipment and to detect possible malfunctions, failures, or deviations from normal behavior. Without collection and analysis of HVAC data, problems with the system or machinery may stay undetected for some time until - in the worst case - the system breaks down and repair works with greater costs become unavoidable.

Various methods for monitoring and analyzing building operational data have been developed. Data is typically gathered with the help of a building management system (BMS), which controls, monitors, and stores the data of the building's mechanical and electrical equipment.

In most applications of machine condition monitoring, strategic measuring points for specific components of the machinery have to be first ascertained and then equipped with the necessary sensor system, if not built-in. The attachment of retrofitted sensor technology on (components of) machines may pose possible security risks or negatively influence the machine's performance (e.g.: falling objects, space problem etc.). So, in cases in which sensors are not already built-in or it is not possible to attach sensors to the machinery the explained setup presents a low-cost and simple solution for machine condition monitoring.

The objective of the present invention is therefore based on the task to develop a method as well as a device for monitoring and analyzing operation data that is simple and minimally invasive.

In the present invention, this task is solved by the features of claim 1, in that, a soundscape in a technical room, in particular a machine noise, is recorded with a recording device, to determine a state of the machinery, wherein the recorded sound is digitally saved as an audio file and transmitted to an edge device wherein the edge device processes the audio files and creates an image of a sound spectrogram of the audio files, wherein the state of the machinery is determined by analyzing the sound spectrogram.

This invention proposes a pipeline for a simple and minimally invasive operation- and condition-monitoring method. This approach can be complemented with off-the-shelf sensors (e.g., vibration sensors or external microphones), which can be either integrated into or independent from the building management system.

The core of the monitoring concept is the recording of the soundscape, i.e., the machine noise, in a technical room to determine the state of the machinery and identify trends in its operation. For this purpose a standard microphone is placed at a suitable position in the technical room, e.g., middle of room, facing a wall to capture the natural reverberation of the room and thus the overall room ambience. The microphone can be part of an internet of things (iot) device, wherein the iot device comprises data connection functionalities to transmit data to other computational units. Preferably, a wireless interface is used. Conceivable would be a transmission via a Uu link via mobile radio. In addition, a Wifi-based standard such as IEEE 802.11a/b/g/n via direct communication or also Bluetooth protocols can also be used.

The sound recording is a non-invasive measure which is decoupled from the software and hardware of the monitored machinery.

In a first embodiment of the method according to the invention a machine learning model is used for analyzing the sound spectrogram and wherein the machine learning model is deployed in the edge device and/or a cloud environment. The described approach combines ideas of various applications of acoustic monitoring from different disciplines and forms a method for automated machine monitoring by analyzing the sound profile of an enclosed space in a long-term setting based on spectrogram images. A further advantage is the cost-efficiency of images (e.g.: PNGs) in terms of storage.

Since the proposed method is designed for long-term observations of machinery, it can also be employed to survey trends in the operation mode as well as detect possible machine degradation based on the comparison of the collected spectrogram data. These data-driven mechanisms may then trigger efforts to optimize machine and operational effectiveness or establish intelligent maintenance strategies.

In a preferred embodiment of the method according to the invention, the machine learning model is based on a convolutional neural network. In terms of image processing and computer vision tasks, Convolutional Neural Networks (CNNs) have been proven to outperform other neural networks or machine learning algorithms. Therefore, a CNN is implemented for the described monitoring method. CNNs typically are feedforward neural networks with eponymous convolutional layers. These special layers are the core building block of a CNN and allow the network to learn abstract patterns from the provided image data. The last layer of the CNN uses a softmax function which normalizes the numerical output to target class probabilities. In a classification task (e.g.: ON vs. OFF) this probability distribution indicates a class assignment for the specific input data.

After the CNN model has been trained, it can be put into operation to provide predictions based on real-time data. The deployment can occur in two ways, either in the edge device or in the cloud. The choice is application-specific and depends on technical factors (e.g., the computational power of the edge devices), organizational factors (e.g., data privacy), and application requirements (e.g., accepted latency).

In another embodiment of the invention, the convolutional neural network is deployed in the cloud, wherein the recording device records the audio, wherein the edge device generates the sound spectrograms and wherein the convolutional neural network produces predictions about the state of the machinery. In this approach the trained CNN model is deployed in the cloud. The IoT device is responsible for the audio recording and the Edge device is solely responsible for the generation of the spectrograms. The spectrograms are delivered to the cloud where the model is in operation and produces the predictions about the machine state.

Alternatively, in another advantageous embodiment of the method, the convolutional neural network is deployed in the edge device, wherein the recording device records the audio and wherein the edge device generates the sound spectrograms and directly feeds the sound spectrograms to the convolutional neural network to produce predictions about the state of the machinery. In this approach the trained CNN model is deployed in the edge device. The IoT device is again responsible for the audio recording. The Edge device generates the spectrograms and directly feeds them to the model in order to produce the prediction. The prediction is then delivered to the cloud for further distribution to the stakeholders.

During monitoring the decision labels for the analyzed spectrograms are collected in a timeline and compared with historical and statistical data.

In a preferred embodiment of the method according to the invention, the audio files are saved in batches as .wav-files and wherein each .wav file undergoes a multi-step procedure via a Short-Time Fourier Transform (STFT) to produce the sound spectrogram. The audio stream from the microphone is saved in batches as .wav-files and delivered to an edge device for further processing (e.g., a general-purpose mini-pc). Here, each .wav file undergoes a multi-step procedure via the Short-Time Fourier Transform (STFT) to produce a so called spectrogram, i.e., a visual representation of the frequency spectrum of a signal as it changes over time.

In another advantageous embodiment of the invention, the sound spectrogram is an image in which a power contribution of different frequencies is represented, wherein a darker coloring indicates more power contribution. A spectrogram can be interpreted as intensity image presenting the power contribution of the different frequencies (y-axis) over time - with darker coloring indicating more power contribution. The scaling of the y-axis can vary depending on the application, but in audio analysis it is common practice to use a mel-scale, which concentrates on the lower frequency components to imitate the non-linear human audio perception. Mechanical processes, as for example found in operating machinery, typically produce audio signals with low and constant frequencies.

In another embodiment of the method according to the invention, the sound spectrograms are generated in grayscale.

By using grayscale images, the computational costs can be kept low during the learning process of the machine learning model. Along the entire data collection pipeline, it is possible to enable optional backup, for example by saving the .wav files, uncompressed or compressed in a memory-saving format, e.g., MP3, locally and/or the spectrogram PNGs.

In another embodiment of the method according to the invention a single z-minute spectrogram images are used to identify an operation mode of different machines located in the monitored technical room wherein τ refers to a time interval which captures a representative sample of the room sound impression. From the collected data a representative subset, e.g.: one month with regular machine operation, is used as training data for a neural network in a supervised learning approach. The main idea includes using single τ-minute spectrogram images to identify the operation mode of the different machines located in the monitored technical room. τ refers to a time interval which captures a representative sample of the room sound impression and needs to be set by trading off between the reactivity of the condition-monitoring system and the sensitivity to longer-term variations of the signal. In empirical observations of the applicant, τ can range between 1 second and 1 hour.

In a further advantageous embodiment of the invention an On-Off status of a machine is identified and/or wherein an intensity of operation is identified. The system can be used to predict the status of the machine in terms of ON-OFF states in terms of a classification problem, and/or in terms of intensity of operation e.g. 0-100% operation intensity. By distinguishing in at least these two cases, the computational resources can be deployed according to the actual use case. If computational resources are low or lower, it might be sufficient to distinguish between the on and off state, since the difference in the spectrograms is more apparent.

The aforementioned task is also solved by a device for monitoring and analyzing operating data with a recording device, wherein the recording device comprises at least one microphone and with at least one edge device. The edge device is able to execute a method according to the invention. The above explanations concerning the method according to the invention also apply accordingly to the device according to the invention.

Electronic or electrical devices and/or other relevant devices or components according to embodiments of the present invention described herein may be implemented using any suitable hardware, firmware (e.g., an application-specific integrated circuit), software, or a combination of software, firmware, and hardware. For example, the various components of these devices may be located on an integrated circuit (IC) or on separate IC chips. In addition, the various components of these devices may be implemented on a flexible printed circuit film, a tape carrier package (TCP), a printed circuit board (PCB), or on a single substrate. Further, the various components of these devices may be a process or thread that runs on one or more processors in one or more computing devices, executes computer program instructions, and interacts with other system components to perform the various functions described herein. The computer program instructions are stored in a memory that may be implemented in a computing device using a standard memory, such as random access memory (RAM).

The computer program instructions may also be stored in other non-transferable computer-readable media, such as a CD-ROM, flash drive, or the like. A person skilled in the art should also recognize that the functionality of various computing devices may be combined or integrated into a single computing device, or that the functionality of a particular computing device may be distributed to one or more other computing devices, without departing from the scope of the exemplary embodiments of the present invention.

The various embodiments of the invention mentioned in this embodiments of the invention can be advantageously combined with each other.

The invention is explained below in embodiment examples with reference to the associated drawings. It shows:
- Figure 1: A schematic representation of a method for monitoring and analyzing operating data,
- Figure 2: different sound spectrograms and
- Figure 3: a schematic representation of a prediction model of a machine learning model.

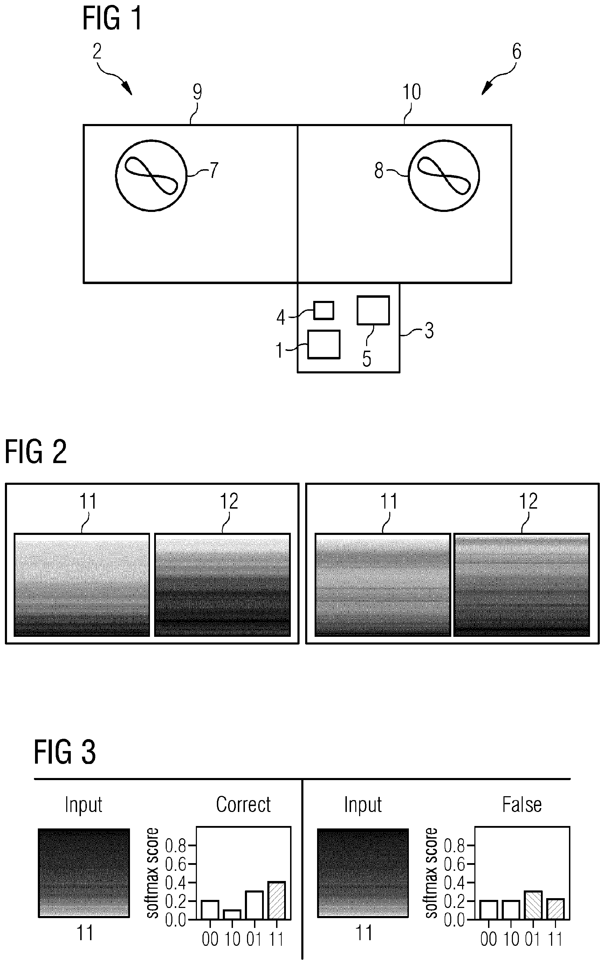

Fig. 1 schematically shows the execution of a method for monitoring and analyzing operating data especially of machines 1 in a building 2. Therefore, a soundscape in a technical room 3 is recorded with a recording device 4. The sound recorded in this embodiment is a machine noise. The recorded sound that the machine 1 emits can be useful to determine an operational state that the machine is in. In addition, sound that differs from sound of a normal operational state, can be a hint for malfunctions etc. The recorded sound is digitally saved as an audio file and transmitted to an edge device 5. The edge device 5 processes the audio files and creates an image of a sound spectrogram of the audio files. The state of the machinery is determined by analyzing the sound spectrogram.

In this embodiment the setup consists of a technical room 3 of a large building 2 accommodating a complex ventilation system 6. The ventilation system 6 is composed of a first individually operable system 7 and a second individually operable system 8 for supply and exhaust air serving a first building part 9 and a second building part 10. Usually, the examined ventilation units remain in one operation mode for a longer period (e.g.: several hours) and switches between modes appear only a few times a day. Supply and exhaust air ventilation for the same unit typically run in parallel.

Figure 2 shows different spectrograms that were generated of the recorded sounds. The data is collected and prepared for further processing. Examples of two different spectrogram variants, linear 11 vs. mel 12, in two different operation modes. On the left side, all ventilation units were off whereas on the right side, all ventilation units were on.

With datasets consisting of labelled spectrograms, a machine learning model is deployed in the edge device and/or a cloud environment.

Figure 3 shows a diagram showing the deployment of a trained machine learning model. Although the predicted target class probabilities should not be interpreted as model confidence in a strict statistical sense, the analysis of the output probability vectors can still be insightful. For instance, the rate of predictions which unambiguously favor one output option, i.e., operation mode, lies for the test data at 97%. This means that only 3% of instances in the test data show greater variation in the distribution of the output probabilities. Figure 7 exemplifies two instances with greater variation in the predicted output class distribution together with their input images. In most cases, however, the prediction distributions are heavily skewed towards one class (i.e.: softmax score of 1.0).

Taken together, these results suggest that spectrograms representing room acoustics can be usefully employed to determine the operation state of ventilation units as part of machine condition monitoring.

### References List

- 1: machine
- 2: building
- 3: technical room
- 4: recording device
- 5: edge device
- 6: ventilation system
- 7: first system
- 8: second system
- 9: first building part
- 10: second building part
- 11: linear
- 12: mel

## Claims

1. Method for monitoring and analyzing operating data, especially of machines (1) in buildings (2),
wherein a soundscape in a technical room (3), in particular a machine noise, is recorded with a recording device (4), to determine a state of the machinery,
wherein the recorded sound is digitally saved as an audio file and transmitted to an edge device (5)
wherein the edge device (5) processes the audio files and creates an image of a sound spectrogram of the audio files,
wherein the state of the machinery is determined by analyzing the sound spectrogram.

2. Method according to claim 1, wherein a machine learning model is used for analyzing the sound spectrogram and wherein the machine learning model is deployed in the edge device (5) and/or a cloud environment.

3. Method according to claim 2, wherein the machine learning model is based on a convolutional neural network.

4. Method according to claim 3, wherein the convolutional neural network is deployed in the cloud, wherein the recording device (4) records the audio, wherein the edge device (5) generates the sound spectrograms and wherein the convolutional neural network produces predictions about the state of the machinery.

5. Method according to claim 3, wherein the convolutional neural network is deployed in the edge device (5), wherein the recording device (4) records the audio and wherein the edge device (5) generates the sound spectrograms and directly feeds the sound spectrograms to the convolutional neural network to produce predictions about the state of the machinery.

6. Method according to any of the claims 1 to 5, wherein the audio files are saved in batches as .wav-files and wherein each .wav file undergoes a multi-step procedure via a Short-Time Fourier Transform (STFT) to produce the sound spectrogram.

7. Method according to any of the claims 1 to 6, wherein the sound spectrogram is an image in which a power contribution of different frequencies is represented, wherein a darker coloring indicates more power contribution.

8. Method according to claim 7 wherein the sound spectrograms are generated in grayscale.

9. Method according to any of the claims 1 to 8, wherein a single τ-minute spectrogram images are used to identify an operation mode of different machines (1) located in the monitored technical room (3) wherein τ refers to a time interval which captures a representative sample of the room sound impression.

10. Method according to any of the claims 1 to 9, wherein an On-Off status of a machine (1) is identified and/or wherein an intesity of operation is identified.

11. Device for monitoring and analyzing operating data with a recording device (4), wherein the recording device comprises at least one microphone and with at least one edge device (5), wherein the edge device (5) is able to execute a method according to any of the claims 1 to 10.
